# EUROPÄISCHE PATENTSCHRIFT

(11) **EP 3 619 798 B1**
(45) Veröffentlichungstag und Bekanntmachung des Hinweises auf die Patenterteilung: **07.04.2021**
(21) Anmeldenummer: 18721326.9
(22) Anmeldetag: 25.04.2018
(51) Int. Cl.: H02K 15/03

(54) **MONTAGEVORRICHTUNG ZUM BESTÜCKEN EINER ROTOREINHEIT MIT MAGNETELEMENTEN**
ASSEMBLY DEVICE FOR FITTING A ROTOR UNIT WITH MAGNET ELEMENTS
DISPOSITIF DE MONTAGE DESTINÉ À ÉQUIPER UNE UNITÉ DE ROTOR D'ÉLÉMENTS MAGNÉTIQUES

(30) Priorität: 05.05.2017 DE 102017207599
(43) Veröffentlichungstag der Anmeldung: 11.03.2020
(73) Patentinhaber: ThyssenKrupp System Engineering GmbH, 74076 Heilbronn (DE); thyssenkrupp AG, 45143 Essen (DE)
(72) Erfinder: WALTER, Andreas, 28790 Schwanewede (DE)
(74) Vertreter: thyssenkrupp Intellectual Property GmbH
(86) Internationale Anmeldenummer: PCT/EP2018/060576
(87) Internationale Veröffentlichungsnummer: WO 2018/202497

(56) Entgegenhaltungen:
- EP-A1- 2 993 768
- EP-A2- 0 751 605
- EP-A2- 2 449 654
- CN-A- 106 300 833
- DE-A1-102011 011 174
- DE-A1-102013 221 594
- FR-A1- 2 632 788
- GB-A- 2 359 417
- US-A- 4 586 244

## Beschreibung

Die Erfindung betrifft eine Montagevorrichtung zum Bestücken einer um eine Achse D rotierbaren Rotoreinheit eines Elektromotors mit einer Mehrzahl an Magnetelementen, mit einer Ausrichtanordnung mit einer Mehrzahl an Aufnahmeschächten zum Aufnehmen und Positionieren jeweils eines Magnetelements, wobei die Aufnahmeschächte umfänglich um eine mit der Achse D der Rotoreinheit korrespondierenden Mittelachse M der Ausrichtanordnung in einem Radius R angeordnet sind.

Elektromotoren können als Innenläufer- oder als Außenläufermotoren ausgebildet sein. Innenläufermotoren weisen ein äußeres Statorelement und ein inneres Rotorelement auf, das koaxial in das Statorelement eingefügt ist. Die Statorelemente und die Rotorelemente sind aus einzelnen Blechlamellen zu Paketen zusammengesetzt, wobei die einzelnen Lamellen durch Stanzen zusammengesetzt werden können. In den einzelnen Blechlamellen sind umfänglich in einem gewissen radialen Abstand zu der Mittelachse M Ausnehmungen für die Aufnahme von Magnetelementen ausgebildet. Indem die Blechlamellen in gleicher Umfangsorientierung zueinander zu den Lamellenpaketen zusammengesetzt werden, bilden die Ausnehmungen der einzelnen Blechlamellen sogenannten Aufnahmenester für die Magnetelemente. Eine Vorrichtung mit deren Hilfe die Aufnahmenester jeweils mit Magnetelementen in einem Arbeitsgang bestückt werden können zeigt die DE 10 2013 221 594 A1. Allerdings kann die beschriebene Vorrichtung nicht eingesetzt werden, wenn in den Aufnahmenestern jeweils federartige Andrückbleche vorgesehen sind, über die die Magnetelemente, nachdem die Aufnahmenester mit diesen bestückt wurden, in den Aufnahmenestern kraftschlüssig oder auch formschlüssig gehalten werden. Bei Vorhandensein dieser Andrückbleche sind besondere Maßnahme zu treffen, dass die Andrückbleche nicht beschädigt werden, während die Aufnahmenester mit den Magnetelementen bestückt werden. Weiterhin ist noch die US 4 586 244 A zu nennen, die eine Vorrichtung zeigt, um drei Magnetelemente auf ein Rotorelement umfänglich aufzubringen.

Ausgehend hiervon besteht die Aufgabe der vorliegenden Erfindung darin, eine Montagevorrichtung bereitzustellen, die es ermöglicht im Hinblick auf die Andrückbleche die Aufnahmenester der Lamellenpakete beschädigungsfrei mit den Magnetelementen zu bestücken.

Die Aufgabe wird gelöst durch eine Montagevorrichtung zum Bestücken einer um eine Achse D rotierbaren Rotoreinheit eines Elektromotors mit einer Mehrzahl an Magnetelementen, mit einer Ausrichtanordnung mit einer Mehrzahl an Aufnahmeschächten zum Aufnehmen und Positionieren jeweils eines Magnetelements, wobei die Aufnahmeschächte umfänglich um eine mit der Achse D der Rotoreinheit korrespondierenden Mittelachse M der Ausrichtanordnung in einem Radius R angeordnet sind und die Ausrichtanordnung zwei koaxial zueinander angeordnete Ausrichtringelemente aufweist und durch Drehung der Ausrichtringelemente um die Mittelachse M zueinander zwischen einer Aufnahmeposition, in der die Magnetelemente im Wesentlichen frei in den jeweiligen Aufnahmeschächten einsitzen, und einer Montageposition überführbar ist, in der die Magnetelemente gegen eine radial gerichtete erste Anlagefläche der Aufnahmeschächte und eine umfänglich ausgerichtete zweite Anlagefläche der Aufnahmeschächte beaufschlagt in den jeweiligen Aufnahmeschächten einsitzen.

Die erfindungsgemäße Montagevorrichtung gewährleistet durch die ersten und die zweite Anlagefläche in den Aufnahmeschächten, dass die Magnetelemente in eine Stellung gebracht werden können, in der sie beim Überführen in die Lamellenpakete des Rotorelements nicht mit den Andrückblechen in den Aufnahmenestern kollidieren und diese gegebenenfalls beschädigen. Zudem ist durch die Möglichkeit der Montagevorrichtung eine Aufnahmeposition und eine Montageposition einnehmen zu können gewährleistet, dass in der Aufnahmeposition die Aufnahmeschächte leicht mit den Magnetelementen bestückt werden können. Als weiterer Vorteil ist zu nennen, dass alle für ein Lamellenpaket erforderlichen Magnetelemente gleichzeitig von der Montagevorrichtung in das Lamellenpaket überführt werden können.

Durch die zwei Ausrichtringelemente, die koaxial zueinander angeordnet sind und die zueinander drehbar sind, ist die Voraussetzung dafür geschaffen, dass die Magnetelemente über eine Wirkverbindung zwischen beiden Ausrichtringelementen in eine definierte Position gebracht werden können, in der die Magnetelemente an den beiden Anlageflächen anliegen.

Eine vorteilhafte Ausgestaltung der Erfindung sieht vor, dass die Aufnahmeschächte in federbeaufschlagten Schieberelementen eines der Ausrichtringelemente angeordnet sind. Durch die federbeaufschlagten Schieberelemente ist gewährleistet, dass die Magnetelemente bei Überführen der Ausrichtanordnung von der Aufnahmeposition in die Montageposition, welches bevorzugt durch Drehung der beiden Ausrichtringelemente erfolgt, nicht eingeklemmt werden, sondern lediglich mit einer definierten Kraft gehalten werden, welche über die Federkennlinie von jeweiligen Federelementen in den Schieberelementen festgelegt werden kann.

Eine vorteilhafte Ausgestaltung der Erfindung sieht vor, dass die Schieberelemente an dem radial inneren der beiden Ausrichtringelemente angeordnet sind. Hierdurch ist eine platzsparende Anordnung der Schieberelemente möglich, da die Schieberelemente über den Umfang in radialer Richtung angeordnet werden können. In einer konkreten Ausgestaltung weist das Ausrichtringelement eine um die Mittelachse M drehbare Kurvenscheibe auf, an der in jeweiligen Kulissenführungen die Schieberelemente geführt sind und über die eine im Wesentlichen nach radial außen gerichtete Zustellbewegung auf die Schieberelemente aufprägbar ist. Über eine Kulissenführung kann in einfacher Weise eine Rotationsbewegung in eine Linearbewegung übersetzt werden, wobei zudem noch eine feinfühlige Übersetzung darstellbar ist.

Eine vorteilhafte Ausgestaltung der Erfindung sieht vor, dass das äußere der beiden Ausrichtringelemente erste und zweite Anschlagelemente aufweist, zum Beaufschlagen der Magnetelemente gegen die erste und zweite Anlagefläche in der Montageposition. Über die beiden Anschlagelemente kann in vorteilhafter Weise erreicht werden, dass über jedes der Anschlagelemente eine eigene Kinematik auf das jeweilige Magnetelement ausgeprägt, so dass über die eine Kinematik das Magnetelement gegen die erste Anlagefläche und über die andere Kinematik gegen die zweite Anschlagfläche beaufschlagt werden kann.

Eine vorteilhafte Ausgestaltung der Erfindung sieht vor, dass die ersten Anschlagelemente unbeweglich auf einem Grundkörper des äußeren Ausrichtringelements gehalten sind und die zweiten Anschlagelemente in Umfangsrichtung relativ zu dem Grundkörper beweglich gehalten sind. Durch bewegliche Halterung der zweiten Anschlagelemente auf dem Grundkörper kann in einfacher Weise eine kinematische Entkopplung der durch die beiden Anschlagelemente auf das jeweilige Magnetelement aufgeprägten Bewegung realisiert werden. In konkreter Ausgestaltung ist vorgesehen, dass die zweiten Anschlagelemente federbeaufschlagt in einer Grundstellung gehalten sind. Die Aufgabe wird ferner gelöst durch ein Verfahren zum Beladen einer zuvor beschriebenen Montagevorrichtung mit einer Mehrzahl an Magnetelementen, mit den Schritten:
Einführen jeweils eines Magnetelements in die Aufnahmeschächte in der Aufnahmeposition der Ausrichtanordnung;
Überführen der Ausrichtanordnung von der Aufnahmeposition in die Montageposition durch Drehen der Ausrichtanordnung um die Mittelachse M, wobei ausgehend von der Aufnahmeposition ein Drehen in eine Vorspannposition des radial äußeren Ausrichtringelements der Ausrichtanordnung relativ zu dem radial inneren Ausrichtringelement der Ausrichtanordnung erfolgt. Eine weitere bevorzugte Ausgestaltung des Verfahrens sieht ein Überführen der Ausrichtanordnung ausgehend von der Vorspannposition in die Montageposition über ein Drehen der Kurvenscheibe des radial inneren Ausrichtelements um die Mittelachse M vor.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung. Hierin zeigen
- Figur 1: wesentliche Bestandteile einer erfindungsgemäßen Montagevorrichtung;
- Figur 2: das radial innere Ausrichtringelement in einer Einzelheit;
- Figur 3: eine Draufsicht eines Schieberelements;
- Figur 4: das radial äußere Ausrichtringelement in einer Einzelheit;
- Figur 5: die Anschlagelemente und deren Anordnung an dem äußeren Ausrichtringelement und
- Figuren 6a, 6b: das inneren und das äußeren Ausrichtringelement in einer gegenseitigen Wirkverbindung.

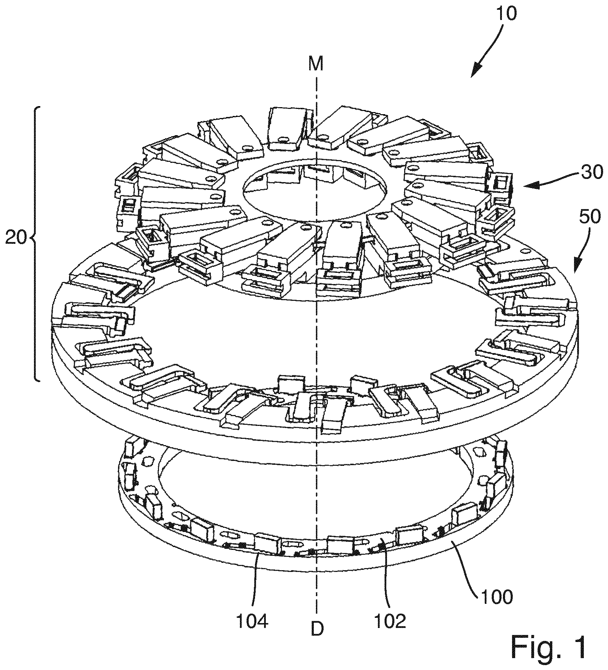

Die Figur 1 zeigt wesentliche Bestandteile einer möglichen Ausgestaltung einer erfindungsgemäßen Montagevorrichtung 10 und einer lediglich anhand eines Blechlamellenpakets dargestellten Rotoreinheit 100 in perspektivischer und explodierter Darstellung. In dem Blechlamellenpaket der Rotoreinheit 100 sind in umfänglich angeordneten Aufnahmenestern 104 jeweils Magnetelemente 102 aufgenommen. Für den späteren Betrieb der Rotoreinheit 100 kann vorgesehen sein, dass diese um eine Drehachse D rotiert. Die Aufnahmenester 104 werden über die Montagevorrichtung 10 mit den Magnetelementen 102 bestückt. Die Montagevorrichtung 10 umfasst zunächst eine Ausrichtanordnung 20, welche an einem nicht dargestellten Grundgestell angeordnet sein kann. Über das Grundgestell kann die Ausrichtanordnung beispielsweise gegenüber der Rotoreinheit 100 bewegt werden und in eine montagegerechte Position gebracht werden. Weiterhin können an dem Grundgestell sogenannte Magnetelementdurchstoßer angeordnet sein, über die die von der Ausrichtanordnung 20 aufgenommenen Magnetelemente 102 in die Aufnahmenester 104 der Rotoreinheit 100 vorgeschoben, das heißt überführt, werden können.

In Figur 1 ist eine bevorzugte Ausgestaltung der Ausrichtanordnung 20 gezeigt, bei der diese zwei koaxial zueinander angeordnete Ausrichtringelemente 30, 50 umfasst. Die beiden Ausrichtringelemente 30, 50 können um eine Mittelachse M zueinander drehbar angeordnet sein, wobei bevorzugt ist, dass das radial äußere Ausrichtringelement 50 drehbar gegenüber dem im Übrigen drehfest angeordneten radial inneren Ausrichtringelement 30 angeordnet ist.

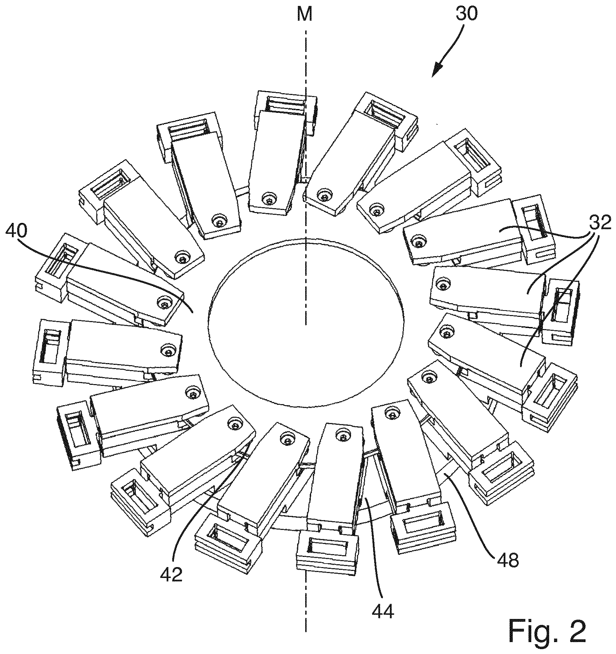

Die Figur 2 zeigt das radial innere Ausrichtringelement 30 in einer Einzelheit, ebenfalls perspektivisch dargestellt. Das Ausrichtringelement 30 umfasst zunächst einen Grundkörper 48, über den das Ausrichtringelement an dem Grundgestell gehalten ist. An dem Grundkörper 48 sind sowohl umfänglich angeordnete Schieberelemente 32 als auch ein um die Mittelachse M drehbare Kurvenscheibe 40 gehalten. Die Schieberelemente 32 sind über Kulissenführungen 42 der Kurvenscheibe 40 an die Kurvenscheibe 40 angebunden und über Schlittenführungen 44 der Kurvenscheibe 40 an der Kurvenscheibe 40 verschieblich gehalten. Hierbei verläuft eine Bewegungsrichtung der Schieberelemente 32 gegenüber der Kurvenscheibe 40 im Wesentlichen radial bezogen auf die Kurvenscheibe, wobei bevorzugt eine Abwinkelung der Bewegungsrichtung von 20° bis 25° von einem Radius der Kurvenscheibe 40 vorgesehen ist.

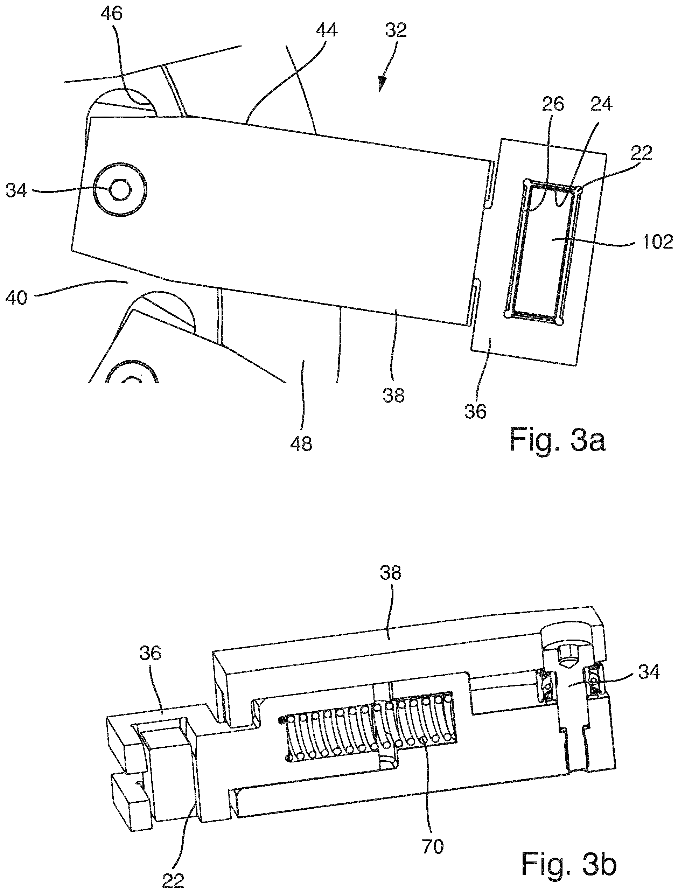

Die Figur 3a) zeigt in einer Draufsicht eine Detaillierung eines Schieberelements 32 und dessen Anbindung an die Kurvenscheibe 40 über die Kulissenführung 42. Die Kulissenführung 42 ist bevorzugt durch mehrere längliche Durchbrüche 46 in der Kurvenscheibe 40 gebildet, wobei der Durchbruch 46 in Umfangrichtung der Kurvenscheibe 40 seinen radialen Abstand zur Mittelache M ändert. In jedem der Durchbrüche 46 sind die jeweiligen Schieberelemente 32 über Lagerstifte 34 beweglich gehalten. Eine Drehung der Kurvenscheibe 40 um die Mittelachse M bewirkt gleichzeitig eine Drehung der Durchbrüche 46 und damit ein radiales Wandern des Eingriffspunktes des Lagerstiftes 34 in dem jeweiligen Durchbruchs. Da der Lagerstift 38 dieser radialen Bewegung folgen muss, ergibt sich eine Verschiebung des Schieberelements 32 in der Schlittenführung 44 des Grundkörpers 48. Weiterhin ist den Figuren 3a und 3b) der Aufbau des Schieberelements 32 an sich zu entnehmen. Figur 3b) zeigt das Schieberelement 32 in einem Längsschnitt. Das Schieberelement 32 umfasst ein Magnetaufnahmeelement 36, das federbeaufschlagt und längenverschieblich in einem Lagerelement 38 des Schieberelements 32 einsitzt. Bevorzugt ist das Lagerelement 2-teilig mit einem oberen und einem unteren Teil ausgebildet. Das zwischen Magnetaufnahmeelement 36 und Lagerelement 38 wirksame Federelement 70 beaufschlagt das Schieberelement 32 in eine Grundstellung, in der es seine maximale Länge einnimmt. Das Magnetaufnahmeelement 36 weist einen über das Lagerelement 38 hinausstehenden Abschnitt auf, in dem ein Aufnahmeschacht 22 zur Aufnahme eines Magnetelements 102 ausgebildet ist. Es ist zu erkennen, dass das Magnetelement 102 umfänglich frei, das heißt mit zumindest einem geringen Spiel, in dem Aufnahmeschacht 22 einsitzt. Dies ist insofern vorteilhaft, als dass ein gewisses Umfangsspiel ein Verklemmen des Magnetelements 102 beim Einführen in den Aufnahmeschacht 22 wirkungsvoll verhindern kann. Zusätzlich kann der Aufnahmeschacht zu der Stirnseite hin, über die das Magnetelement 102 in den Schacht eingeführt wird, mit einer umlaufenden Einführfase versehen sein. Unter Verweis auf die Figur 2 ist zu erkennen, dass die Magnetaufnahmeelemente 36 von radial außen und in Umfangsrichtung derart mit einem Einführschlitz 28 versehen sind, dass der Aufnahmeschacht 22 in einen oberen Bereich und einen unteren Bereich unterteilt wird. Schließlich sind in dem Aufnahmeschacht 22 im Bereich der Seitenwandungen eine radial gerichtete erste Anlagefläche 24 und umfänglich ausgerichtete zweite Anlagefläche 26 ausgebildet.

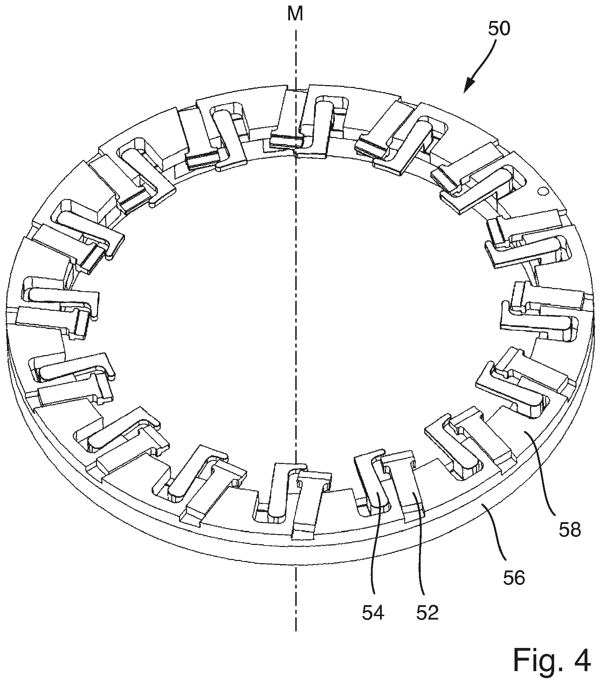

Die Figur 4 zeigt das radial äußere Ausrichtringelement 50 in einer Einzelheit, ebenfalls perspektivisch dargestellt. Das Ausrichtringelement 50 umfasst zunächst einen Grundkörper 56 und bevorzugt einen deckungsgleich auf diesem angeordneten Verschlussring 58. Das Ausrichtringelement 50 umfasst umfänglich abwechselnd angeordnete und nach radial innen gerichtete erste Anschlagelemente 52 und zweite Anschlagelemente 54. Indem die Anschlagelemente 52, 54 nach radial innen gerichtet sind, sind sie erfindungsgemäß dazu bestimmt mit den umfänglich korrespondieren Schieberelementen 32 des inneren Ausrichtringelement 30 in eine Wirkbeziehung zu treten, wie diese noch beschrieben wird.

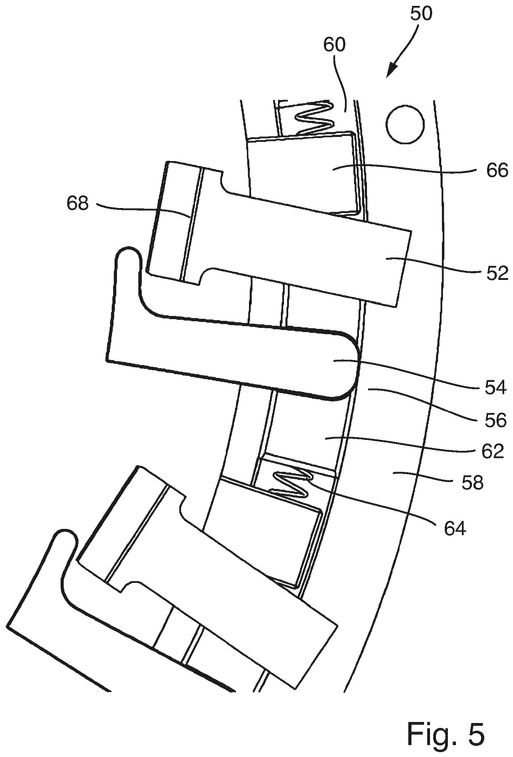

Die Figur 5 zeigt eine Detaillierung der beiden Anschlagelemente 52, 54 und deren Anordnung an dem äußeren Ausrichtringelement 50. Zunächst ist das erste Anschlagelement 52, welches eine hammerartige Form mit einem radial innen sich verbreiternden Kopfabschnitt 68 ausbildet, unbeweglich an Verschlussring 58 gehalten. Alternativ kann das erste Anschlagelement 52 auch an dem Grundkörper 56 gehalten sein. Die Figur 5 zeigt aus Darstellungsgründen das Verschlussring 58 in einer halbtransparenten Darstellung. Hierdurch ist zu erkennen, dass der Grundkörper 56 eine Umfangsnut 60 ausbildet, in der abwechselnd ein Aufnahmefuß 62 des zweiten Anschlagelements 54, ein Federelement 64 und ein ortsfester Arretierblock 66 aufgenommen ist. Diese Anordnung bedingt, dass zwischen zwei benachbarten Arretierblocks 66 ein Anschlagelement 54 beziehungsweise dessen Aufnahmefuß 62 und ein Federelement 64 unter Vorspannung gehalten ist, so dass das Federelement 64 das Anschlagelement 54 in eine Grundstellung beaufschlagt. Die Anschlagelemente 54 können folglich entgegen der Federbeaufschlagung in Umfangsrichtung relativ zu dem Grundkörper 56 bewegt werden.

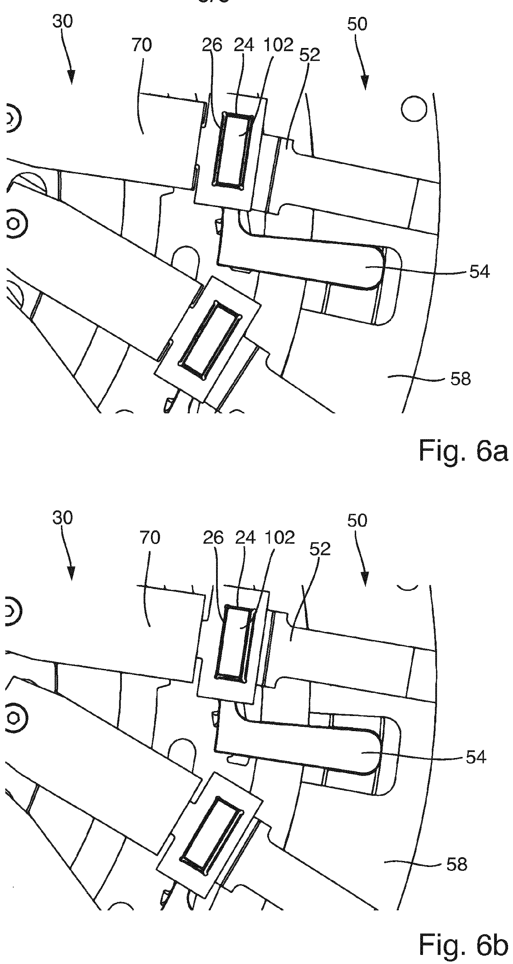

Die Figuren 6a) und 6b) zeigt das inneren und das äußeren Ausrichtringelement 30, 50 in einer gegenseitigen Wirkverbindung, wobei nur ein Ausschnitt dargestellt ist. In der Figur 6a) ist die Aufnahmeposition gezeigt, was daran zu erkennen ist, dass die beiden Anschlagelemente 52, 54 nicht am dem Magnetelement 102 anliegen. In der Figur 6b) ist die Montageposition gezeigt, was daran zu erkennen ist, dass die beiden Anschlagelemente 52, 54 nunmehr am dem Magnetelement 102 anliegen. Weiterhin ist an der halbtransparenten Darstellung des Magnetaufnahmeelements zu erkennen, dass die beiden Anschlagelemente 52, 54 bereits in der Aufnahmeposition in den Einführschlitz 28 eingreifen. In der Aufnahmeposition ist das äußere Ausrichtringelement 50 in eine Ausgangstellung gedreht, die durch Drehung im Uhrzeigersinn eingenommen wird. Durch eine Drehung des äußeren Ausrichtringelements 50 im Gegenuhrzeigersinn gelangt die Montageeinheit 10 in eine Zwischenstellung, in der die beiden Anschlagelemente 52, 54 nicht am dem Magnetelement 102 zur Anlage gebracht wurden. Hierbei erfährt das Magnetelement 102 durch das erste Anschlagelement 52 eine im Wesentlichen radial nach innen gerichtete Beaufschlagung gegen die umfänglich ausgerichtete Anlagefläche 26 in dem Aufnahmeschacht 22. Entsprechend erfährt das Magnetelement 102 durch das zweite Anschlagelement 54 eine im Wesentlichen umfänglich gerichtete Beaufschlagung gegen die radial gerichtete Anlagefläche 26 in dem Aufnahmeschacht 22. Bevorzugt im Anschluss hieran erfährt die Kulissenscheibe 40 eine Drehung im Gegenuhrzeigersinn, wodurch die Lagerstifte 34 der Schieberelemente 32 eine relative Bewegung in der Kulissenführung 42 und das Lagerelement 38 entgegen der Federkraft des Federelements 70 nach außen verschoben wird. Hierüber wird das Federelement 70 weiter gespannt und das Magnetelement 102 mit einer definierten Kraft gegen das erste Anschlagelement 52 beaufschlagt.

Der Vorgang des Bestückens eines Blechlamellenpakets mit Magnetelementen 102 kann insgesamt wie folgt beschrieben werden: Das Blechlamellenpaket liegt ausgerichtet in einer entsprechenden Aufnahme bevorzugt unter einer erfindungsgemäßen Montagevorrichtung 10. Weiterhin sind Magnetelementdurchstoßer vorgesehen, wobei die Anzahl der Magnetelementdurchstoßer gleich der Anzahl der Aufnahmenester 104 im Blechlamellenpaket ist. Die Magnetelementdurchstoßer können mit zusätzlichen Komponenten zur Qualitätssicherung und Kontrolle, wie beispielsweise Kraft-Wegmessung oder Federn, versehen sein. Die Montagevorrichtung 10 wird zuvor oder in der soeben beschriebenen Position mit Magnetelemente 102 bestückt und die Magnetelemente 102 befinden sich sodann in der Montagevorrichtung 10 in der ausgerichteten und eingespannten Position, indem die Montagevorrichtung 10 von der Aufnahmeposition in die Montageposition überführt wurde. Die Montagevorrichtung 10 umfasst zur Kontaktierung mit dem Blechlamellenpaket eine Anschlagfläche, die bevorzugt auf den äußeren Ausrichtringelement 50 angeordnet ist. Ist diese Positionierung beziehungsweise Kontaktierung erfolgt, dann werden die in der Montagevorrichtung 10 eingespannten Magnetelemente 10 mit den Magnetelementdurchstoßer in die Aufnahmenester 104 des Blechlamellenpakets überführt.

### Bezugszeichenliste

- 10: Montagevorrichtung
- 20: Ausrichtanordnung
- 22: Aufnahmeschacht
- 24: Anlagefläche
- 26: Anlagefläche
- 28: Einführschlitz
- 30: Ausrichtringelement
- 32: Schieberelement
- 34: Lagerstift
- 36: Magnetaufnahmeelement
- 38: Lagerelement
- 40: Kurvenscheibe
- 42: Kulissenführung
- 44: Schlittenführungen
- 46: Durchbruch
- 48: Grundkörper
- 50: Ausrichtringelement
- 52: Anschlagelement
- 54: Anschlagelement
- 56: Grundkörper
- 58: Verschlussring
- 60: Umfangsnut
- 62: Aufnahmefuß
- 64: Federelement
- 66: Arretierblock
- 68: Kopfabschnitt
- 70: Federelement
- 100: Rotoreinheit
- 102: Magnetelement
- 104: Aufnahmenest

## Patentansprüche

1. Montagevorrichtung (10) zum Bestücken einer um eine Achse (D) rotierbaren Rotoreinheit
(100) eines Elektromotors mit einer Mehrzahl an Magnetelementen (102), umfassend eine Ausrichtanordnung (20) mit einer Mehrzahl an Aufnahmeschächten (22) zum Aufnehmen und Positionieren jeweils eines Magnetelements (102), wobei die Aufnahmeschächte (22) umfänglich um eine mit der Achse (D) der Rotoreinheit korrespondierenden Mittelachse (M) der Ausrichtanordnung (20) in einem Radius (R) angeordnet sind, wobei die Ausrichtanordnung (20) zwei koaxial zueinander angeordnete Ausrichtringelemente (30, 50) aufweist und durch Drehung der Ausrichtringelemente (30, 50) um die Mittelachse (M) zueinander zwischen einer Aufnahmeposition, in der die Magnetelemente (102) im Wesentlichen frei in den jeweiligen Aufnahmeschächten (22) einsitzen, und einer Montageposition überführbar ist, in der die Magnetelemente (102) gegen eine radial gerichtete erste Anlagefläche (24) der Aufnahmeschächte (22) und eine umfänglich ausgerichtete zweite Anlagefläche (26) der Aufnahmeschächte (22) beaufschlagt in den jeweiligen Aufnahmeschächten (22) einsitzen.

2. Montagevorrichtung (10) nach Anspruch 1, **dadurch gekennzeichnet, dass** die Aufnahmeschächte (22) in federbeaufschlagten Schieberelementen (32) eines der Ausrichtringelemente (30, 50) angeordnet sind.

3. Montagevorrichtung (10) nach Anspruch 2, **dadurch gekennzeichnet, dass** die Schieberelemente (32) an dem radial inneren der beiden Ausrichtringelemente (30, 50) angeordnet sind.

4. Montagevorrichtung (10) nach einem der Ansprüche 2 bis 3, **dadurch gekennzeichnet,**
**dass** das Ausrichtringelement (30) eine um die Mittelachse (M) drehbare Kurvenscheibe (40)
aufweist, an der in jeweiligen Kulissenführungen (42) die Schieberelemente (32) geführt sind und über die eine im Wesentlichen nach radial außen gerichtete Zustellbewegung auf die Schieberelemente (32) aufprägbar ist.

5. Montagevorrichtung (10) nach einem der Ansprüche 1 bis 4, **dadurch gekennzeichnet, dass** das radial äußere der beiden Ausrichtringelemente (30, 50) erste und zweite Anschlagelemente (52, 54) aufweist, zum Beaufschlagen der Magnetelemente (102) gegen die erste und zweite Anlagefläche (24, 26) in der Montageposition.

6. Montagevorrichtung (10) nach Anspruch 5, **dadurch gekennzeichnet, dass** die ersten Anschlagelemente (52) unbeweglich auf einem Grundkörper (56) des äußeren Ausrichtringelements (50) gehalten sind und die zweiten Anschlagelemente (54) in Umfangsrichtung relativ zu dem Grundkörper (56) beweglich gehalten sind.

7. Montagevorrichtung (10) nach Anspruch 6, **dadurch gekennzeichnet, dass** die zweiten Anschlagelemente (54) federbeaufschlagt in einer Grundstellung gehalten sind.

8. Verfahren zum Beladen einer Montagevorrichtung (10) nach einem der Ansprüche 1 bis 7 mit einer Mehrzahl an Magnetelementen (102), mit den Schritten:
- Einführen jeweils eines Magnetelements (102) in die Aufnahmeschächte (22) in der Aufnahmeposition der Ausrichtanordnung (20);
- Überführen der Ausrichtanordnung (20) von der Aufnahmeposition in die Montageposition durch Drehen der Ausrichtanordnung (20) um die Mittelachse (M), wobei ausgehend von der Aufnahmeposition ein Drehen in eine Vorspannposition des radial äußeren Ausrichtringelements (50) der Ausrichtanordnung (20) relativ zu dem radial inneren Ausrichtringelement (30) der Ausrichtanordnung (20) erfolgt.

9. Verfahren nach Anspruch 8, **gekennzeichnet durch** Überführen der Ausrichtanordnung (20) ausgehend von der Vorspannposition in die Montageposition über ein Drehen der Kurvenscheibe (40) des radial inneren Ausrichtelements (30) um die Mittelachse (M).

## Claims

1. Assembly device (10) for equipping a rotor unit (100), which can be rotated about an axis (D), of an electric motor with a plurality of magnetic elements (102), comprising an aligning arrangement (20) having a plurality of receiving wells (22) for receiving and positioning a respective magnetic element (102), wherein the receiving wells (22) are arranged circumferentially about a centre axis (M), which corresponds to the axis (D) of the rotor unit, of the aligning arrangement (20) in a radius (R), wherein the aligning arrangement (20) has two aligning ring elements (30, 50) arranged coaxially to one another and, by rotating the aligning ring elements (30, 50) about the centre axis (M) relative to one another, can be transferred between a receiving position, in which the magnetic elements (102) are seated substantially freely in the respective receiving wells (22), and an assembly position, in which the magnetic elements (102), while being urged against a radially directed first abutment surface (24) of the receiving wells (22) and a circumferentially oriented second abutment surface (26) of the receiving wells (22), are seated in the respective receiving wells (22).

2. Assembly device (10) according to Claim 1, **characterized in that** the receiving wells (22) are arranged in spring-loaded slide elements (32) of one of the aligning ring elements (30, 50).

3. Assembly device (10) according to Claim 2, **characterized in that** the slide elements (32) are arranged on the radially inner of the two aligning ring elements (30, 50).

4. Assembly device (10) according to one of Claims 2 to 3, **characterized in that** the aligning ring element (30) has a cam disc (40) which can be rotated about the centre axis (M), on which cam disc (40) the slide elements (32) are guided in respective slotted guides (42) and via which a substantially radially outwardly directed infeed movement can be imparted to the slide elements (32).

5. Assembly device (10) according to one of Claims 1 to 4, **characterized in that** the radially outer of the two aligning ring elements (30, 50) has first and second abutment elements (52, 54) for urging the magnetic elements (102) against the first and second abutment surface (24, 26) in the assembly position.

6. Assembly device (10) according to Claim 5, **characterized in that** the first abutment elements (52) are held immovably on a basic body (56) of the outer aligning ring element (50), and the second abutment elements (54) are held movably in the circumferential direction relative to the basic body (56).

7. Assembly device (10) according to Claim 6, **characterized in that** the second abutment elements (54) are held under a spring loading in a base position.

8. Method for loading an assembly device (10) according to one of Claims 1 to 7 with a plurality of magnetic elements (102), comprising the following steps:
- inserting a respective magnetic element (102) into the receiving wells (22) in the receiving position of the aligning arrangement (20);
- transferring the aligning arrangement (20) from the receiving position into the assembly position by rotating the aligning arrangement (20) about the centre axis (M), wherein, starting from the receiving position, there occurs a rotation into a preloading position of the radially outer aligning ring element (50) of the aligning arrangement (20) relative to the radially inner aligning ring element (30) of the aligning arrangement (20).

9. Method according to Claim 8, **characterized by** transferring the aligning arrangement (20), starting from the preloading position, into the assembly position by rotating the cam disc (40) of the radially inner aligning element (30) about the centre axis (M).

## Revendications

1. Dispositif de montage (10) destiné à équiper une unité formant rotor (100) d'un moteur électrique, laquelle peut tourner sur un axe (D), avec une pluralité d'éléments magnétiques (102), ledit dispositif comprenant un ensemble d'orientation (20) pourvu d'une pluralité d'alvéoles de réception (22) destinées à recevoir et positionner chacune un élément magnétique (102), les alvéoles de réception (22) étant disposés dans un rayon (R) circonférentiellement autour d'un axe central (M) de l'ensemble d'orientation (20), lequel axe correspond à l'axe (D) de l'unité formant rotor,
l'ensemble d'orientation (20) comportant deux éléments d'orientation annulaires (30, 50) disposés coaxialement l'un à l'autre et pouvant être transférés par rotation des éléments d'orientation annulaires (30, 50) autour de l'axe central (M) l'un par rapport à l'autre entre une position de réception, dans laquelle les éléments magnétiques (102) siègent sensiblement librement dans les alvéoles de réception respectifs (22), et une position de montage dans laquelle les éléments magnétiques (102) siègent dans les alvéoles de réception respectifs (22) en étant contraints contre une première surface d'appui (24), dirigée radialement, des alvéoles de réception (22) et une deuxième surface d'appui (26), orientée circonférentiellement, des alvéoles de réception (22).

2. Dispositif de montage (10) selon la revendication 1, **caractérisé en ce que** les alvéoles de réception (22) sont disposés dans des éléments coulissants (32), contraints par ressort, de l'un des éléments d'orientation annulaires (30, 50).

3. Dispositif de montage (10) selon la revendication 2, **caractérisé en ce que** les éléments coulissants (32) sont disposés au niveau de celui des deux éléments d'orientation annulaires (30, 50) qui est situé radialement à l'intérieur.

4. Dispositif de montage (10) selon l'une des revendications 2 à 3, **caractérisé en ce que** l'élément d'orientation annulaire (30) comporte un disque de came (40) qui peut être mis en rotation sur l'axe central (M), au niveau duquel les éléments coulissants (32) sont guidés dans des guides de coulisse respectifs (42) et par le biais duquel un mouvement d'avance, orienté sensiblement radialement vers l'extérieur, peut être imprimé aux éléments coulissants (32).

5. Dispositif de montage (10) selon l'une des revendications 1 à 4, **caractérisé en ce que** celui des deux éléments d'orientation annulaire (30, 50) qui est situé radialement à l'extérieur comporte des premier et deuxième éléments de butée (52, 54) destinés à contraindre les éléments magnétiques (102) contre la première et la deuxième surface d'appui (24, 26) dans la position de montage.

6. Dispositif de montage (10) selon la revendication 5, **caractérisé en ce que** les premiers éléments de butée (52) sont maintenus de manière immobile sur un corps de base (56) de l'élément d'orientation annulaire extérieur (50) et les deuxièmes éléments de butée d'arrêt (54) sont maintenus de manière mobile dans la direction circonférentielle par rapport au corps de base (56).

7. Dispositif de montage (10) selon la revendication 6, **caractérisé en ce que** les deuxièmes éléments de butée (54) sont maintenus dans une position de base en étant contraints par ressort.

8. Procédé de chargement d'un dispositif de montage (10) selon l'une des revendications 1 à 7 avec une pluralité d'éléments magnétiques (102), le procédé comprenant les étapes suivantes :
- introduire un élément magnétique respectif (102) dans les alvéoles de réception (22) dans la position de réception de l'ensemble d'orientation (20) ;
- transférer l'ensemble d'orientation (20) de la position de réception à la position de montage par rotation de l'ensemble d'orientation (20) sur l'axe central (M),
une rotation jusque dans une position de précontrainte de l'élément d'orientation annulaire radialement extérieur (50) de l'ensemble d'orientation (20) par rapport à l'élément d'orientation annulaire radialement intérieur (30) de l'ensemble d'orientation (20) étant effectuée à partir de la position de réception.

9. Procédé selon la revendication 8, **caractérisé par** le transfert de l'ensemble d'orientation (20) depuis la position de précontrainte jusque dans la position de montage par rotation du disque de came (40) de l'élément d'orientation annulaire radialement intérieur (30) sur l'axe central (M).
